# EUROPÄISCHE PATENTANMELDUNG

(11) **EP 4 650 720 A1**
(43) Veröffentlichungstag der Anmeldung: **19.11.2025**
(21) Anmeldenummer: 24176691.4
(22) Anmeldetag: 17.05.2024
(51) Int. Cl.: G01D 5/14, G01D 3/08, H02K 11/215

(54) **SENSORANORDNUNG FÜR EINEN ELEKTRISCHEN MOTOR, SOWIE ELEKTRISCHER MOTOR**

(71) Anmelder: Siemens Aktiengesellschaft, 80333 München (DE)
(72) Erfinder: Gutzmer, Marcus, 30827 Garbsen (DE); Krause, Uwe, 30982 Pattensen (DE); Nolting, Christoph, 91315 Höchstadt/Aisch (DE); Wittkowski, Michael, 48291 Telgte (DE)
(74) Vertreter: Siemens Patent Attorneys

(57) **Zusammenfassung**

Die Erfindung betrifft eine Sensoranordnung (12) für einen elektrischen Motor (10), mit zumindest einer Trägerplatte (14) mit einer Oberseite (16) und einer Unterseite (18), wobei auf der Oberseite (16) ein erstes Sensorelement (20) angeordnet ist und auf der Unterseite (18) ein zweites Sensorelement (22) angeordnet ist, wobei das erste Sensorelement (20) und das zweite Sensorelement (22) jeweils eine serielle Kommunikationsschnittstelle (24) aufweisen zum seriellen Kommunizieren miteinander. Ferner betrifft die Erfindung einen elektrischen Motor (10).

## Beschreibung

Die Erfindung betrifft eine Sensoranordnung für einen elektrischen Motor, mit zumindest einer Trägerplatte mit einer Oberseite und einer Unterseite, wobei auf der Oberseite ein erstes Sensorelement angeordnet ist und auf der Unterseite ein zweites Sensorelement angeordnet ist. Ferner betrifft die Erfindung einen elektrischen Motor mit einer eben solche Sensoranordnung.

Sensoranordnungen, welche auch als Encoder bezeichnet werden, sind zur Ist-Drehwinkelermittlung eines elektrischen Motors vorgesehen. Diese Information wird zwingend benötigt für die betriebliche Kommutierung des Motors per Umrichter, die betriebliche Regelung des Motors entsprechend der Antriebsaufgabe durch den Umrichter sowie bei Betriebsanwendungen, welche Anforderungen an die funktionale Sicherheit haben, in Verbindung mit dem Umrichter.

Hierzu ist für eine sicherheitsgerichtete Funktion ein "sicherer Sensor" benötigt. Hierzu sind diverse Vorschriften bekannt, welche die sicherheitsgerichtete Funktion entsprechend beschreiben.

Um oben genannten Anforderungen und Normen zu entsprechen und eine Lösung nach bestem Stand der Technik zu realisieren, werden je nach erforderlichen SIL (safety integrity level) der Anbindung folgende Techniken zur Erfassung des Drehwinkels angewendet. Werden unter anderem Sensoren zur Erfassung des Drehwinkels sowie ein Sensor verwendet, jedoch mit einem hohen Diagnosedeckungskraft, z.B. analoger Resolver mit der Diagnose von >99,9% kann bis zu einem SIL3 Level erreicht werden. Des Weiteren sind diverse Sensoren, z.B. magnetischer Encoder in Kombination mit einem optischen Geber, Encoder an verschiedenen Anbauorten, optische, magnetische oder andere Sensoren in Kombination mit Hall-Gebern bekannt.

Aufgabe der vorliegenden Erfindung ist es eine Sensoranordnung sowie einen elektrischen Motor zu schaffen, mittels welchen ein verbesserter Betrieb des elektrischen Motors realisiert werden kann.

Diese Aufgabe wird durch eine Sensoranordnung sowie durch einen elektrischen Motor gemäß den unabhängigen Patentansprüchen gelöst. Vorteilhafte Ausgestaltungsformen sind in den Unteransprüchen angegeben.

Ein Aspekt der Erfindung betrifft eine Sensoranordnung für einen elektrischen Motor, mit zumindest einer Trägerplatte mit einer Oberseite und einer Unterseite, wobei auf der Oberseite ein erstes Sensorelement angeordnet ist und auf der Unterseite ein zweites Sensorelement angeordnet ist.

Es ist dabei vorgesehen, dass das erste Sensorelement und das zweite Sensorelement jeweils eine serielle Kommunikationsschnittstelle aufweisen zum seriellen Kommunizieren miteinander.

Insbesondere ist es somit eine Verwendung von Sensorelementen in einer günstigen Anordnung vorgesehen, wobei diese insbesondere durch die Trägerplatte räumlich voneinander getrennt sind. Die räumliche Trennung der Sensorelemente durch die Leiterplatte bietet Vorteile gegenüber redundanten Strukturen auf einem einzigen Chip. Des Weiteren erfolgt die Verwendung eines seriellen Protokolls zur Verbindung der beiden Sensoren untereinander als auch mit dem Umrichter, welches die Anforderungen an die funktionale Sicherheit erfüllt.

Dadurch ist es insbesondere ermöglicht, dass Standard integrierte Schaltkreise (ICs) verwendet werden können, was eine breitere Verfügbarkeit sowie eine Kostenoptimierung realisiert. Des Weiteren können auch unterschiedliche Sensorprinzipien verwendet werden, was zu einer Erhöhung in der Diversität führt, sowie Vorteile bei der funktionalen Sicherheit hat. Des Weiteren ist die Resistenz gegenüber Fehler gemeinsamer Ursache entsprechend erhöht. Es ist auch die Nutzung verschiedener IC-Typen bzw. auch von unterschiedlichen Herstellern ermöglicht. Dies ermöglicht auch die Erhöhung der Diversität, und hat Vorteile bei der funktionalen Sicherheit, insbesondere bei einem unabhängigen Entwurf und Umsetzung der Sensorelemente, was die Resistenz gegen Fehler gemeinsamer Ursachen erhöht. Des Weiteren kann eine kompakte Bauart bereitgestellt werden, sodass räumlich vorteilhaft die beiden Sensorelemente angeordnet werden können.

Gemäß einer vorteilhaften Ausgestaltungsform sind die beiden Sensorelemente gegenüberliegend voneinander angeordnet. Mit anderen Worten ist eine Unterseite des ersten Sensorelements einer Unterseite des zweiten Sensorelements zugewandt angeordnet, wobei zwischen den beiden Sensorelementen wiederum im Wesentlichen die Trägerplatte ausgebildet ist. Somit kann eine kompakte Sensoranordnung bereitgestellt werden, was wiederum zu einem räumlichen Vorteil für einen elektrischen Motor führt.

Weiterhin vorteilhaft ist, wenn die Kommunikationsschnittstelle zum Übertragen eines sicherheitsgerichteten Übertragungsprotokolls ausgebildet ist. Bei dem sicherheitsgerichteten Übertragungsprotokoll kann es sich bspw. um die sogenannte BiSS Safety handeln, welches von den Merkmalen einfunktionale Sicherheit bis SIL 3 unterstützt. Somit kann eine hohe funktionale Sicherheit für den elektrischen Motor bereitgestellt werden.

Eine weitere vorteilhafte Ausgestaltungsform sieht vor, dass das erste Sensorelement und/oder das zweite Sensorelement eine weitere Kommunikationsschnittstelle zum Kommunizieren mit einer Umrichtereinrichtung des elektrischen Motors aufweist. Beispielsweise kann somit ein Sensorelement entsprechende Kommunikationsschnittstellen für die Umrichtereinrichtung bieten. Des Weiteren kann von der Umrichtereinrichtung zusätzlich noch ein entsprechendes Clock-Signal an die jeweiligen Sensorelemente übertragen werden. Somit kann eine zuverlässige Funktionsbereitstellung für den elektrischen Motor realisiert werden. Dies ist vorteilhaft um Aktionen im Sensor auszulösen oder Daten durch den Master zu parametrieren.

Es hat sich weiterhin als vorteilhaft erwiesen, wenn das erste Sensorelement und das zweite Sensorelement unterschiedlich ausgebildet sind. Dabei können sowohl die Erfassungsart unterschiedlich sein, bspw. eine magnetische Erfassung, eine optische Erfassung oder auch andere Erfassungsmöglichkeiten. Des Weiteren können diese auch in ihrer Größe und ihrer Ausgestaltungsform entsprechend unterschiedlich ausgebildet sein. Ferner sind auch unterschiedliche Hersteller möglich. Somit kann eine erhöhte Resistenz gegenüber Fehlern innerhalb des elektrischen Motors realisiert werden.

Weiterhin vorteilhaft ist, wenn das erste Sensorelement und das zweite Sensorelement gleich ausgebildet sind. Mit anderen Worten sind das erste Sensorelement und das zweite Sensorelement bspw. in ihrer Erfassungsart bzw. Ausgestaltungsform oder von dem Hersteller entsprechend gleich ausgebildet. Somit kann eine einfache Möglichkeit geschaffen werden, die entsprechende Sensoranordnung bereitzustellen und insbesondere können entsprechende Nachschubwege bereitgestellt werden.

In einer weiteren vorteilhaften Ausgestaltungsform ist vorgesehen, dass das erste Sensorelement und/oder das zweite Sensorelement als ein magnetisches Sensorelement ausgebildet sind. Insbesondere magnetische Sensorelemente haben sich entsprechend vorteilhaft erwiesen, um in elektrischen Motoren eingesetzt zu werden.

Dabei sieht insbesondere eine vorteilhafte Ausgestaltungsform vor, dass das erste Sensorelement und/oder das zweite Sensorelement als Hallsensorelement ausgebildet sind. Insbesondere Hallsensorelemente haben sich als entsprechend robust für elektrische Motoren und insbesondere für die Steuerung elektrischer Motoren erwiesen. Somit kann eine robuste Sensoranordnung für den elektrischen Motor bereitgestellt werden.

Ebenfalls vorteilhaft ist, wenn die Trägerplatte als Leiterplatte ausgebildet ist. Somit weist die Trägerplatte insbesondere zusätzlich neben der reinen Tragfunktion auch elektrische Leitungen auf, um bspw. auf Basis eines Surface Mounted Technology (SMT) hergestellt zu werden. Somit kann die Trägerplatte eine Doppelfunktion übernehmen, nämlich zum einen das Tragen der Sensorelemente als auch die entsprechenden elektrischen Kontaktierungen der Sensorelemente sowie Peripherieschaltungsteile bereitstellen.

Ferner hat es sich als vorteilhaft erwiesen, wenn das erste Sensorelement und/oder das zweite Sensorelement zum Erfassen eines Magnetfeldes eines Magnetelements auf einer Drehachse des elektrischen Motors ausgebildet sind. Hierzu kann bspw. vorgesehen sein, dass das Magnetelement entsprechend an der Drehachse des elektrischen Motors angeordnet ist und somit auf Basis eines Drehens des Magnetfeldes auf eine aktuelle Position des elektrischen Motors schließen zu können. Auf Basis dessen kann dann wiederum die entsprechende Steuerung des elektrischen Motors erfolgen.

In einer weiteren vorteilhaften Ausgestaltungsform ist vorgesehen, dass das Magnetelement als Diametralmagnet ausgebildet ist. Somit kann zuverlässig ein Magnetfeld erzeugt werden, was über die Sensorelemente zuverlässig erfasst werden kann.

Dabei sieht eine weitere Ausgestaltungsform vor, dass nur das erste Sensorelement, welches insbesondere auf der Oberseite angeordnet ist, dem Magnetelement zugewandt ist. Somit kann eine einfache und dennoch zuverlässige Sensoranordnung bereitgestellt werden.

Ebenfalls vorteilhaft ist, wenn das erste Sensorelement und/oder das zweite Sensorelement zum Durchführen einer Diagnosefunktion für den elektrischen Motor ausgebildet sind. Insbesondere können somit neben der Hauptkommunikationsrichtung der Sensorelemente zur Umrichtereinrichtung eine Konfigurations- und Diagnosefunktion und somit auch die Kommunikationsrichtung von der Umrichtereinrichtung zum Sensorelement bzw. zu den Sensorelementen bereitgestellt werden. Hierbei kann es sich bspw. ebenfalls um eine BiSS Kommunikationsverbindung handeln. Somit können auch Konfigurations- und Diagnosefunktionen über die Sensorelemente zur Umrichtereinrichtung hin bereitgestellt werden.

Gemäß einer weiteren vorteilhaften Ausgestaltungsform ist vorgesehen, dass das erste Sensorelement mit einer ersten Spannungsversorgung bereitgestellt ist und das zweite Sensorelement mit einer zur ersten Spannungsversorgung getrennten zweiten Spannungsversorgung bereitgestellt ist. Insbesondere ist somit eine Potenzialtrennung zwischen den Sensorelementen realisiert. Dies hat den Vorteil, dass eine Entkopplung der Sensorelemente sehr robust bereitgestellt werden kann, insbesondere im Gegensatz zum Stand der Technik auf der On-Chip-Redundanz.

Ein weiterer Aspekt der Erfindung betrifft einen elektrischen Motor mit zumindest einer Sensoranordnung nach dem vorherigen Aspekt. Der elektrische Motor weist bspw. zusätzlich ein Gehäuse sowie entsprechende Anordnungen innerhalb des elektrischen Motors auf, um entsprechend eine Drehung der Drehachse zu erzeugen. Ferner sind entsprechende elektronische Recheneinrichtungen sowie Steuerungsfunktionen, die Umrichtereinrichtung und weitere Bauteile für den elektrischen Motor ausgebildet.

Vorteilhafte Ausgestaltungsformen der Sensoranordnung sind als vorteilhafte Ausgestaltungsform des elektrischen Motors anzusehen.

Unter einer Recheneinheit/elektronische Recheneinrichtung/programmierbare Logikeinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "applicationspecific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "readonly memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibung sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

Dabei zeigen:
- FIG 1: eine schematische Schnittansicht einer Ausführungsform einer Sensoranordnung;
- FIG 2: ein schematisches Blockschaltbild gemäß einer Ausführungsform eines elektrischen Motors mit einer Sensoranordnung.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

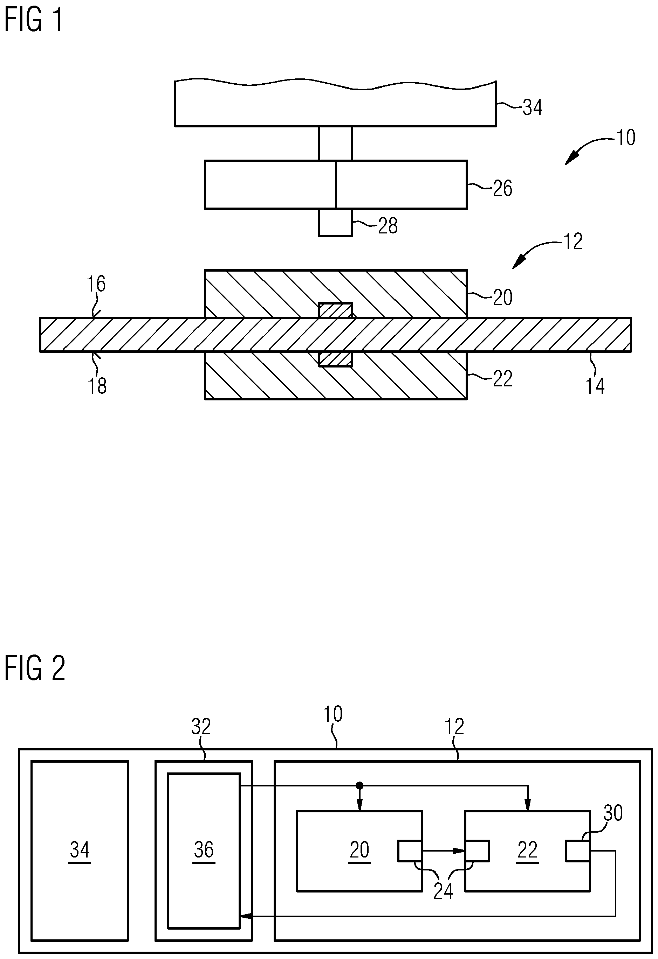

FIG 1 zeigt eine schematische Schnittansicht einer Ausführungsform eines elektrischen Motors 10 mit einer Ausführungsform einer Sensoranordnung 12. Die Sensoranordnung 12 weist zumindest eine Trägerplatte 14 mit einer Oberseite 16 und einer Unterseite 18 auf. Auf der Oberseite 16 ist ein erstes Sensorelement 20 ausgebildet und auf der Unterseite 18 ist ein zweites Sensorelement 22 ausgebildet. Es ist dabei vorgesehen, dass das Sensorelement 20 und das zweite Sensorelement 22 jeweils eine serielle Kommunikationsschnittstelle 24 aufweisen zum seriellen Kommunizieren miteinander.

Dabei zeigt die FIG 1 insbesondere, dass die beiden Sensorelemente 20, 22 gegenüberliegend voneinander angeordnet sind.

Dabei ist ferner insbesondere gezeigt, dass das erste Sensorelement 20 und/oder das zweite Sensorelement 22 als ein magnetisches Sensorelement ausgebildet sind, insbesondere in Form eines Hallsensorelements. Die Trägerplatte 14 kann dabei insbesondere als Leiterplatte ausgebildet sein und entsprechende Leitungen aufweisen, um bspw. eine Spannungsversorgung der Sensorelemente 20, 22 bereitstellen zu können.

Des Weiteren ist insbesondere gezeigt, dass das erste Sensorelement 20 und das zweite Sensorelement 22 zum Erfassen eines Magnetfelds eines Magnetelements 26 auf einer Drehachse 28 des elektrischen Motors 10 ausgebildet sind. Das Magnetelement 26 kann dabei bevorzugt als Diametralmagnet ausgebildet sein. Ferner sind auch Off-Axis Magnetelemente möglich.

Dabei zeigt die FIG 1 ferner, dass nur das erste Sensorelement 20 dem Magnetelement 26 zugewandt ist. Das erste Sensorelement 20 ist im folgenden Ausführungsbeispiel insbesondere als durchführendes Sensorelement 20 ausgebildet und das zweite Sensorelement 22 als Safety Sensorelement bereitgestellt.

FIG 2 zeigt ein schematisches Blockschaltbild gemäß einer Ausführungsform des elektrischen Motors 10. Dabei ist insbesondere gezeigt, dass die Kommunikationsschnittstelle 24 zum übertragen eines sicherheitsgerichteten Übertragungsprotokolls ausgebildet ist. Des Weiteren weist das erste Sensorelement 20 und/oder das zweite Sensorelement 22, im folgenden Ausführungsbeispiel das zweite Sensorelement 22, eine weitere Kommunikationsschnittstelle 30 auf zum Kommunizieren mit einer Umrichtereinrichtung 32 des elektrischen Motors 10. Die Umrichtereinrichtung ist in diesem Beispiel Teil des elektrischen Motors 10. Die Umrichtereinrichtung 32 kann jedoch auch nicht Teil des elektrischen Motors 10 sein. Die Umrichtereinrichtung 32 kann insbesondere wiederum mit einem weiteren Motorteil 34 entsprechend in Verbindung stehen. Dabei kann insbesondere vorgesehen sein, dass das erste Sensorelement 20 und/oder das zweite Sensorelement 22 zum Durchführen einer Diagnosefunktion für den elektrischen Motor 10 bzw. auch für Umrichtereinrichtung 32 ausgebildet sind. Des Weiteren kann das erste Sensorelement 20 mit einer ersten Spannungsversorgung bereitgestellt sein und das zweite Sensorelement 22 mit einer zur ersten Spannungsversorgung getrennten zweiten Spannungsversorgung bereitgestellt sein.

Insbesondere zeigen somit die FIG 1 und FIG 2 die Verwendung von bspw. zwei gleichartig ausgebildeten Sensorelementen 20, 22 in einer günstigen Anordnung. Hierbei ist insbesondere der Diametralmagnet auf der Drehachse 28 angeordnet. Es folgt dann das erste Sensorelement 20, die Trägerplatte 14 und dann wiederum das zweite Sensorelement 22.

Die räumliche Trennung der Sensorelemente 20, 22 durch die Trägerplatte 14 bietet Vorteile gegenüber redundanten Strukturen auf einem einzigen Chip. Des Weiteren ist die Verwendung unterschiedlicher Sensorprinzipien der Sensorschaltungen ermöglicht. Ebenfalls ist die Verwendung eines seriellen Protokolls zur Verbindung der beiden Sensorelemente 20, 22 untereinander als auch mit der Umrichtereinrichtung 32 vorgesehen, welches insbesondere die Anforderung und die funktionale Sicherheit erfüllt. Hierzu kann bspw. auch die Umrichtereinrichtung 32 eine entsprechende Kommunikationseinrichtung 36 aufweisen. Die Kommunikation zwischen der Umrichtereinrichtung 32 und den Sensorelementen 20, 22 sowie der Sensorelemente 20, 22 untereinander kann insbesondere dem sogenannten BiSS-Kommunikationsprotokoll unterliegen.

Insbesondere ist somit die Verwendung eines geeigneten sicherheitsgerichteten Übertragungsprotokolls vorgesehen, insbesondere BiSS-Safety, und unterstützt Safety Integrity Level (SIL) bis zu 3..

Ferner ist ein Zusatznutzen zu verzeichnen, denn neben der Hauptkommunikationsrichtung der Sensorelemente 20, 22 zur Umrichtereinrichtung 32 kann auch zu Konfigurations- und Diagnosezwecken auch eine Kommunikationsrichtung von der Umrichtereinrichtung 32 zu den Sensorelementen 20, 22 vorgesehen sein, was ebenfalls insbesondere dem sogenannten BiSS-Protokoll entspricht.

Insbesondere kann somit eine klare Potenzialtrennung der Versorgungen der Schaltungen für die beiden Sensorelemente 20, 22 vorgesehen sein. Die Entkopplung der Sensorelemente 20, 22 ist damit eindeutig besser als bei On-Chip-Redundanzsystem gemäß dem Stand der Technik. Des Weiteren kann die Verwendung von Standard IC's möglich sein, was insbesondere eine breitere Verfügbarkeit sowie eine Kostenoptimierung realisiert. Ebenfalls können auch unterschiedliche Sensorprinzipien realisiert werden, was insbesondere die Erhöhung der Diversität, und Vorteil bei der funktionalen Sicherheit hat, da insbesondere die Resistenz gegenüber Fehlern gemeinsamer Ursache erhöht wird. Ferner können auch verschiedene IC-Typen bzw. - Hersteller für die Sensorelemente 20, 22 genutzt werden, was ebenfalls zur Erhöhung der Diversität führt und Vorteile bei der funktionalen Sicherheit aufweist. Insbesondere bei einem unabhängigen Entwurf und Umsetzung der Sensorelemente hat dies entsprechende Vorteile. Ferner kann auch die Resistenz gegenüber Fehlern somit erhöht werden. Des Weiteren kann eine kompakte Bauart für den elektrischen Motor 10 bereitgestellt werden.

## Patentansprüche

1. Sensoranordnung (12) für einen elektrischen Motor (10), mit zumindest einer Trägerplatte (14) mit einer Oberseite (16) und einer Unterseite (18), wobei auf der Oberseite (16) ein erstes Sensorelement (20) angeordnet ist und auf der Unterseite (18) ein zweites Sensorelement (22) angeordnet ist,
**dadurch gekennzeichnet, dass**
das erste Sensorelement (20) und das zweite Sensorelement (22) jeweils eine serielle Kommunikationsschnittstelle (24) aufweisen zum seriellen Kommunizieren miteinander.

2. Sensoranordnung (12) nach Anspruch 1, **dadurch gekennzeichnet, dass**
die beiden Sensorelemente (20, 22) gegenüberliegend voneinander angeordnet sind.

3. Sensoranordnung (12) nach Anspruch 1 oder 2, **dadurch gekennzeichnet, dass**
die Kommunikationsschnittstelle (24) zum Übertragen eines sicherheitsgerichteten Übertragungsprotokolls ausgebildet ist.

4. Sensoranordnung (12) nach einem der vorhergehenden Ansprüche, **dadurch gekennzeichnet, dass**
das erste Sensorelement (20) und/oder das zweite Sensorelement (22) eine weitere Kommunikationsschnittstelle (30) zum Kommunizieren mit einer Umrichtereinrichtung (32) des elektrischen Motors (10) aufweist.

5. Sensoranordnung (12) nach einem der vorhergehenden Ansprüche, **dadurch gekennzeichnet, dass**
das erste Sensorelement (20) und das zweite Sensorelement (22) unterschiedlich ausgebildet sind.

6. Sensoranordnung (12) nach einem der Ansprüche 1 bis 4, **dadurch gekennzeichnet, dass** das erste Sensorelement (20) und das zweite Sensorelement (22) gleich ausgebildet sind.

7. Sensoranordnung (12) nach einem der vorhergehenden Ansprüche, **dadurch gekennzeichnet, dass**
das erste Sensorelement (20) und/oder das zweite Sensorelement (22) als ein magnetisches Sensorelement (20, 22)ausgebildet sind.

8. Sensoranordnung (12) nach Anspruch 7, **dadurch gekennzeichnet, dass**
das erste Sensorelement (20) und/oder das zweite Sensorelement (22) als Hallsensorelement ausgebildet sind.

9. Sensoranordnung (12) nach einem der vorhergehenden Ansprüche, **dadurch gekennzeichnet, dass**
die Trägerplatte (14) als Leiterplatte ausgebildet ist.

10. Sensoranordnung (12) nach einem der vorhergehenden Ansprüche, **dadurch gekennzeichnet, dass**
das erste Sensorelement (20) und/oder das zweite Sensorelement (22) zum Erfassen eines Magnetfeldes eines Magnetelements (26) auf einer Drehachse (28) des elektrischen Motors (10) ausgebildet sind.

11. Sensoranordnung (12) nach Anspruch 10, **dadurch gekennzeichnet, dass**
das Magnetelement (26) als Diametralmagnet ausgebildet ist.

12. Sensoranordnung (12) nach Anspruch 10 oder 11, **dadurch gekennzeichnet, dass**
nur das erste Sensorelement dem Magnetelement zugewandt ist.

13. Sensoranordnung (12) nach einem der vorhergehenden Ansprüche, **dadurch gekennzeichnet, dass**
das erste Sensorelement (20) und/oder das zweite Sensorelement (22) zum Durchführen einer Diagnosefunktion für den elektrischen Motor (10) ausgebildet sind.

14. Sensoranordnung (12) nach einem der vorhergehenden Ansprüche, **dadurch gekennzeichnet, dass**
das erste Sensorelement (20) mit einer ersten Spannungsversorgung bereitgestellt ist und das zweite Sensorelement (22) mit einer zur ersten Spannungsversorgung getrennten zweiten Spannungsversorgung bereitgestellt ist.

15. Elektrischer Motor (10) mit zumindest einer Sensoranordnung (12) nach einem der Ansprüche 1 bis 14.
